# EUROPEAN PATENT SPECIFICATION

(11) **EP 1 635 527 B1**
(45) Date of publication and mention of the grant of the patent: **06.07.2011**
(21) Application number: 04077496.0
(22) Date of filing: 08.09.2004
(51) Int. Cl.: H04L 29/06, H04L 29/12

(54) **Method for addressing a device in behalf of establishing a communication path between a telephony network and a data network**
Verfahren zur Adressierung eines Kommunikationsgeräts zur Herstellung eines Übertragungsweges zwischen einem Datennetzwerk und einem Fernsprechnetzwerk
Procédé d'adressage d'un dispositif de communication pour établir une voie de communication entre un réseau téléphonique et un réseau de données

(43) Date of publication of application: 15.03.2006
(73) Proprietor: Koninklijke KPN N.V., 2516 CK The Hague (NL)
(72) Inventor: Scheltens, Robert, 2343 BW Oegstgeest (NL)
(74) Representative: Wuyts, Koenraad Maria

(56) References cited:
- WO-A-98/41925
- US-A1- 2001 018 656
- US-B1- 6 192 044
- SCHOEN U ET AL PINNACLE GROUP: "CONVERGENCE BETWEEN PUBLIC SWITCHING AND THE INTERNET" ISS '97. WORLD TELECOMMUNICATIONS CONGRESS. (INTERNATIONAL SWITCHING SYMPOSIUM). GLOBAL NETWORK EVOLUTION: CONVERGENCE OR COLLISION? TORONTO, SEPT. 21 - 26, 1997, ISS. WORLD TELECOMMUNICATIONS CONGRESS. (INTERNATIONAL SWITCHING SYMPOSIUM), TORONTO, P, vol. VOL. 1, 21 September 1997 (1997-09-21), pages 549-560, XP000720563

## Description

### FIELD OF THE INVENTION

The present invention relates to a method for addressing a destination device present in a data network domain when setting up a communication path from an originating device in the telephony domain.

### BACKGROUND OF THE INVENTION

Nowadays, voice over IP (VolP) services are widespread. In the case of VolP voice traffic is transported using a data communication protocol, i.e. the Internet Protocol (IP). VolP can be applied on the Internet but is also possible to have VolP available within a private network such as an in-company data network. In general, conversion is needed to convert the speech signal to be transported into a data signal that is suitable to be transported via a data communication protocol. Regarding the end-user equipment that is involved in VolP, one can in general distinguish equipment that is related to the telephony domain and equipment that is related to the data communication domain. Equipment of the first category can for instance be a (mobile) telephone. Equipment of the latter category can for instance be a personal computer that comprises facilities for enabling speech communication. These facilities can be a microphone, a speaker, etc. There is also a distinction with regard to the way in which a VolP call is set up. A VolP call can be set up from a device in the telephony domain such as a telephone to a device in the data communication domain such as a personal computer or vice versa. It is also possible that a VolP call is set up between two devices in the data communication domain, such as two personal computers. In all situations it is needed that the originator addresses the destination but the way in which this is done depends, amongst others, on the type of originating and destination equipment.

US 6,192,044 describes a way of establishing a network phone call between two PCs. Both PCs have to be connected to the Internet, e.g. by using a telephone modem to dial-in to an Internet Access Provider. A solution is proposed for the traditional problem of the "rendezvous" model, in that both PCs must be online before an Internet phone connection can be established. If a caller PC wants to establish a telephone connection to the callee PC through the Internet a look-up service and callee connection service may be used. A callee identifier may be sent to the look-up service that in return provides callee's telephone number and identity of callee's network access provider to caller. The caller then sends a request, including the telephone number of callee, to the callee connection service, hosted by callee's network access provider. The callee's network access provider can then call the callee's PC. The callee need not be online. The access provider will call the callee.

Schoen u; et al: "convergence between public switching and the Internet", 1997-09-21, World telecommunications congress. (International Switching Symposium), vol. 1, page(s): 549-560 proposes convergence between public switching and the Internet by Telco ISPs integrating their Point of Presence (PoP) into the central office. The PoP may have a dial-in modem pool to terminate dial-in calls from analog modems using the PPP protocol and an IP router. The dial-in calls come from PCs in the form of dial-in Internet. The circuit switched telephony connections are still routed via the line concentrator and narrowband switch fabric.

US 2001/0018656 A1 describes a system wherein a call can be made from a telephone to a PC on the Internet. The user uses a conventional telephone to call a server. The user then speaks an email address, an IP address or a homepage address. The server uses voice recognition to convert the spoken address to an IP-compatible format and uses this to set-up the connection. The server and speech recognition unit are connected to the telephone network.

In WO 01/35605 a method is presented for providing telephony services via an IP network, in which case a telephone number is used to address the destination. This is the case if an end-user sets up a communication path using a telephone with another end-user that uses a computer device. A draw back of this prior art is that the destination then needs to be addressed by a telephone number which telephone number is not always available to the originating end-user. For instance, if the destination end-user is subscribed to an Internet Service provider (ISP) this end-user can be on-line from any location. The destination end-user is not limited to a specific physical location, so the telephone number associated with the actual physical location may be different each time. It would then not be possible for the originating end-user to set-up a communication path.

### AIM OF THE INVENTION

It is an object of the invention to eliminate the drawbacks of the prior art and to provide a method for addressing from a device in the telephony domain another device that is in the data communications domain without using a telephone number.

### SUMMARY OF THE INVENTION

In accordance with this invention, a method is provided as defined in independent claim 1.

In a first aspect of the invention a method is disclosed for setting up a communication path from a first device in a telephony domain to a second device in a data communication domain. The device in the telephony domain can be a telephone, a mobile telephone or any other type of device via which telephony related services could be used. The end-user using the first device dials a telephone number in order to connect to a point of presence (PoP), via which the domain of an Internet Service Provider can be accessed. A PoP according to the present invention is unlike state of the art PoP's configured to handle voice traffic. Another advantage of the PoP's according to the invention is that it is possible to connect from a first device to the ISP's domain without being charged with long distance fees.

The domain of the ISP comprises a connect facility which enables the originating end-user to address the destination end-user without using a telephone number. For instance, a client number, address information, an URL address, an e-mail address or an IP address can be used to address the destination end-user or the device used by the destination end-user. For the ISP it is possible to provide the telephonedirectory with the telephone number via which the PoP's can be accessed and the client numbers of the end-users that are subscribed to that ISP. In such way the telephone number is publicly available. With this information other end-users, that are not subscribed to the ISP, can connect to the devices of the end-users subscribed to the ISP without having available the telephone numbers of the latter users. If the originating end-user is subscribed to the ISP, then it is possible for the ISP to make available the client numbers via a web page. If subscribers are connected to the Internet with fixed IP addresses, then it is possible to use these IP addresses for setting up communications paths between end-users for voice traffic without using the connect facility.

### BRIEF DESCRIPTION OF THE DRAWING FIGURE

The foregoing aspects and many of attendant advantages of this invention will become better understood by reference to the following detailed description, when taken in conjunction with the accompanying drawing, wherein:

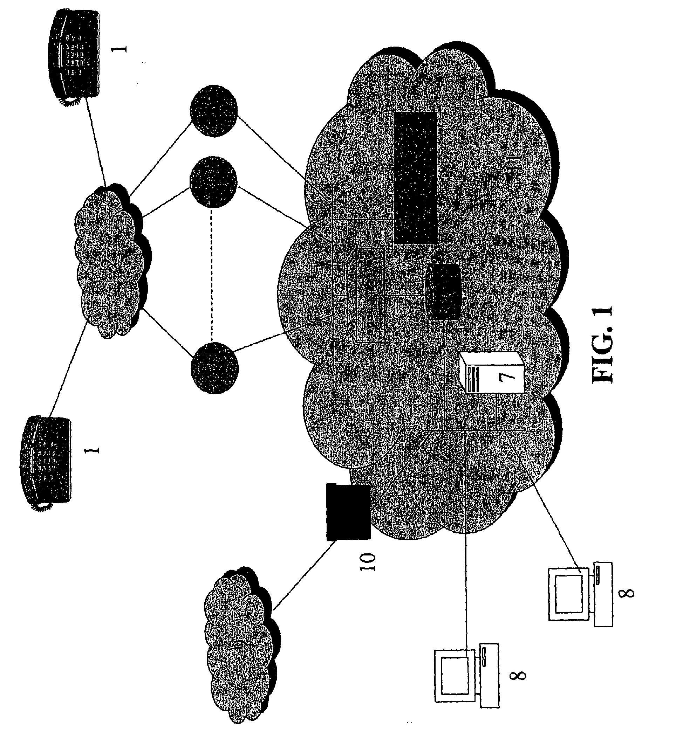

FIG. 1 is a block diagram illustrating the concept of addressing a device in a data communication domain.

### EXEMPLARY EMBODIMENTS

For the purpose of teaching of the invention, preferred embodiments of the method and devices of the invention are described in the sequel. It will be apparent to the person skilled in the art that other alternative and equivalent embodiments of the invention can be conceived and reduced to practice without departing form the true spirit of the invention, the scope of the invention being limited only by the appended claims as finally granted.

FIG.1 shows a conceptual picture of the invention. A first device (1) is a device that can be used by an originating end-user (not depicted in the figure) for communication purposes. The first device (1) can, amongst others, be a telephone or a mobile telephone. In general, the first device (1) is used in a telephony domain in which telephony related services are provided such as voice services and SMS (short message service). A telephony domain comprises exchanges that route the telephony traffic. Also comprised by a telephony domain are facilities that provide signaling functionality. A well-known signaling system is signaling system no. 7 (SS no7). The first device (1) is connected to a telephony network (2). The telephony network (2) comprises one or more local exchanges. Between a first device (1) and a local exchange there often is a signaling procedure when a connected is set up via the first device (1). It may be possible that two first devices (1) are connected to the same local exchange in the case that both first devices (1) are located near each other. But the two first devices (1) are each connected to another local exchange in other cases. Via the telephony network (2) a point of presence (PoP, 3) can be reached. A PoP (3) is a dial-in facility capable of handling traffic originating from a first device (1). A PoP (3) comprises access equipment via which end-users using a first device (3) can connect to a domain (11) of an Internet service Provider. The PoP's (3) can be geographically located in such a way that the end-users using the first devices (1) are charged with local distance fees instead of long distance fees by the operator operating the telephony network (2), which is an advantage of the use of the PoP's (3). The PoP's (3) are able to handle voice traffic, including the signaling procedures needed to set a connection. Additionally, a PoP (3) may also comprise facilities for handling data traffic such as modems and other dial-in equipment.

A PoP (3) can be connected to the domain (11) of an Internet Service Provider via a leased line, although other types of connections are not excluded in the present invention. The domain (11) can be a location comprising different types of data communications related equipment. In the case of an Internet Service Provider, this equipment is based on the IP protocol, and other protocols and techniques that are related to IP (such as HTTP, FTP, and JAVA). Different types of equipment can be comprised by the domain (11) such as a local area network (LAN), servers, routers, and hosts. Also software and firmware can be comprised by the domain (11). In the set up phase for establishing a communication path between the first device (1) and a second device (8) the first device (1) is connected to a connect facility (4). The connect facility (4) is able to set up a communication path bases on a address identifier that is supplied by the end-user using the first device (1), i.e. the originating end-user. It can be sufficient to supply the connect facility (4) with one address identifier, but it may also the case that more than one address identifiers are needed to define the second device (the destination device). The address identifier can be a client number associated with the end-user that uses the second device (8). The client number can be provided by the Internet Service Provider to which the addressed end-user is subscribed. The originating end-user has to enter the client number via the first device (1) after there is established a connection between the first device (1) and the connect facility (4). However, it may also be possible that the client number is entered by the originating end-user during the establishing of the connection. In another embodiment the address identifier comprises address information such as a zip code. In yet another embodiment of the present invention the address identifier is information provided by the originating end-user via a voice response system comprised by the connect facility (4), for instance the name and the address of the destination end-user. Other types of information are not excluded in the present invention when considering the address identifier. An advantage of the usage of the connect facility (4) is that the originating end-user does not need a telephone number to set up a communication path to the destination end-user.

The second device (8) can, amongst others, be a personal computer. In general, the second device (8) is used in a data communication domain in which data communications related services are provided based, in this embodiment, IP. The second device (8) can be connected to the domain (11) of the Internet Service Provider via a dialed connection. It may be the case that for this purpose a point of presence is used that is integrated in the point of presence (3) that is used to connect the first device (1) to domain (11). However, it may also be the case that both access facilities to the domain (11) of the Internet Service Provider are separate. Domain (11) comprises a server (7) via which services are provided to the end-users using the second device (8) such as e-mail services, hosting services and access to the Internet. A firewall (10) is comprised by domain (11) for security purposes. There is also at least one router (6) in the local network of the Internet Service Provider.

When the communication path between the first device (1) and the second device (8) is defined using the connect facility (4) the traffic between both devices is routed through a converter facility (5). The converter facility (5) converts voice traffic into data traffic, the latter being in this embodiment VolP.

## Claims

1. Method for addressing from a telephone (1) a personal computer (8) for setting up a communication path between the telephone (1) and the personal computer (8), the personal computer (8) being connected to a domain (11) of an Internet Service Provider, the method comprises the steps of setting up a connection between the telephone (1) and a connect facility (4) in the Internet Service Provider domain (11) using a telephone number and supplying said connect facility (4) via said connection with an address identifier that is associated with the personal computer (8), where the address identifier is a code for identifying the personal computer (8) that is entered via the telephone (1) in combination with the telephone number for connecting the telephone (1) and connect facility (4), and where the connection between the telephone (1) and the connect facility (4) is made via a point of presence (3) of the Internet Service Provider and the Internet Service Provider provides a telephone directory comprising the telephone number via which the point of presence can be accessed and the address identifier of the personal computer.

2. Method according to claim 1, in which via the connect facility (4) upon receipt of the address identifier the communication path is set up, which communication path comprises a converter facility (5) for the conversion between voice traffic and data traffic.

3. Method according to any of the preceding claims, in which a data communication protocol that is used in the data communication domain is the Internet Protocol.

4. Method according to claim 1, in which the code is a client number associated with the user of the personal computer (8).

5. Method according to claim 1, in which the code is a zip code in combination with a home address.

6. Method according to claims 1 to 4, in which the connect facility (4) comprises a voice response system, which receives via the telephone (1) the address identifier in the form of a spoken message.

## Patentansprüche

1. Verfahren zum Adressieren eines Personal Computer (8) von einem Telefon (1) aus zum Aufbauen eines Kommunikationspfads zwischen dem Telefon (1) und dem Personal Computer (8), wobei der Personal Computer (8) mit einer Domäne (11) eines Internet-Dienstanbieters verbunden ist, wobei das Verfahren die folgenden Schritte umfasst: Aufbauen einer Verbindung zwischen dem Telefon (1) und einer Verbindungseinrichtung (4) in der Internet-Dienstanbieterdomäne (11) unter Verwendung einer Telefonnummer und Versehen der Verbindungseinrichtung (4) mit einer Adressenkennung, die mit dem Personal Computer(8) assoziiert ist, über die Verbindung, wobei die Adressenkennung ein Code zum Identifizieren des Personal Computer (8) ist, der über das Telefon (1) in Kombination mit der Telefonnummer zum Verbinden des Telefons (1) und der Verbindungseinrichtung (4) eingegeben wird, und wobei die Verbindung zwischen dem Telefon (1) und der Verbindungseinrichtung (4) über einen Zugangspunkt (3) des Internet-Dienstanbieters erfolgt und der Internet-Dienstanbieter ein Telefonverzeichnis bereitstellt, das die Telefonnummer, über die auf den Zugangspunkt zugegriffen werden kann, und die Adressenkennung des Personal Computer umfasst.

2. Verfahren nach Anspruch 1, wobei über die Verbindungseinrichtung (4) beim Empfang der Adressenkennung der Kommunikationspfad aufgebaut wird, wobei der Kommunikationspfad eine Umsetzereinrichtung (5) zur Umsetzung zwischen Sprachverkehr und Datenverkehr umfasst.

3. Verfahren nach einem der vorhergehenden Ansprüche, wobei das Datenkommunikationsprotokoll, das in der Datenkommunikationsdomäne verwendet wird, das Internetprotokoll ist.

4. Verfahren nach Anspruch 1, wobei der Code eine mit dem Benutzer des Personal Computer (8) assoziierte Client-Nummer ist.

5. Verfahren nach Anspruch 1, wobei der Code eine Postleitzahl in Kombination mit einer Privatadresse ist.

6. Verfahren nach Anspruch 1 bis 4, wobei die Verbindungseinrichtung (4) ein Sprachantwortsystem umfasst, das über das Telefon (1) die Adressenkennung in Form einer gesprochenen Nachricht empfängt.

## Revendications

1. Procédé d'adressage d'un ordinateur personnel (8) depuis un téléphone (1) en vue d'établir une voie de communication entre le téléphone (1) et l'ordinateur personnel (8), l'ordinateur personnel (8) étant connecté à un domaine (11) d'un Fournisseur d'Accès Internet, le procédé comprenant les étapes consistant à établir une connexion entre le téléphone (1) et une installation de connexion (4) dans le domaine (11) du Fournisseur d'Accès Internet au moyen d'un numéro de téléphone et à fournir à ladite installation de connexion (4) par le biais de ladite connexion un identifiant d'adresse qui est associé à l'ordinateur personnel (8), l'identifiant d'adresse étant un code d'identification de l'ordinateur personnel (8) entré par le biais du téléphone (1) combiné au numéro de téléphone en vue de connecter le téléphone (1) et l'installation de connexion (4), et la connexion entre le téléphone (1) et l'installation de connexion (4) se faisant par le biais d'un point de présence (3) du Fournisseur d'Accès Internet et le Fournisseur d'Accès Internet fournissant un annuaire téléphonique comprenant le numéro de téléphone permettant d'accéder au point de présence ainsi que l'identifiant d'adresse de l'ordinateur personnel.

2. Procédé selon la revendication 1, la voie de communication étant établie par le biais de l'installation de connexion (4) lors de la réception de l'identifiant d'adresse, laquelle voie de communication comprend une installation de conversion (5) permettant la conversion trafic voix / trafic de données.

3. Procédé selon l'une quelconque des revendications précédentes, un protocole de communication de données utilisé dans le domaine de communication de données étant le Protocole Internet.

4. Procédé selon la revendication 1, le code étant un numéro de client associé à l'utilisateur de l'ordinateur personnel (8).

5. Procédé selon la revendication 1, le code étant un code postal combiné à une adresse de domicile.

6. Procédé selon les revendications 1 à 4, l'installation de connexion (4) comprenant un système de réponse vocale, lequel reçoit l'identifiant d'adresse par le biais du téléphone (1) sous la forme d'un message parlé.
